# EUROPEAN PATENT SPECIFICATION

(11) **EP 3 612 348 B1**
(45) Date of publication and mention of the grant of the patent: **17.05.2023**
(21) Application number: 18715746.6
(22) Date of filing: 11.04.2018
(51) Int. Cl.: B23Q 3/155, B23Q 3/157

(54) **METHOD FOR LOADING AND REPLACING TOOLS IN MACHINING CENTERS PROVIDED WITH A MECHANIZED TOOL MAGAZINE, AND MACHINING CENTER USING THE METHOD**
VERFAHREN ZUM LADEN UND ERSETZEN VON WERKZEUGEN IN BEARBEITUNGSZENTREN MIT EINEM MECHANISCHEN WERKZEUGMAGAZIN UND BEARBEITUNGSZENTRUM UNTER VERWENDUNG DES VERFAHRENS
PROCÉDÉ DE CHARGEMENT ET DE REMPLACEMENT D'OUTILS DANS DES CENTRES D'USINAGE POURVUS D'UN MAGASIN D'OUTILS MÉCANISÉ, ET CENTRE D'USINAGE UTILISANT LE PROCÉDÉ

(30) Priority: 19.04.2017 IT 201700042590
(43) Date of publication of application: 26.02.2020
(73) Proprietor: Vigel S.p.A., 10071 Borgaro Torinese (IT)
(72) Inventor: FRANCESIA VILLA, Daniele, 10070 Mezzenile (IT)
(74) Representative: Modiano, Micaela Nadia
(86) International application number: PCT/EP2018/059314
(87) International publication number: WO 2018/192825

(56) References cited:
- EP-A1- 1 291 124
- EP-A1- 1 637 279
- DE-A1-102008 063 513
- FR-A1- 2 907 357
- JP-A- 2009 006 455

## Description

The present invention relates to a method for loading and replacing tools in machining centers provided with a mechanized tool magazine and to a machining center that uses said method.

As is known, a generic machining center can generally comprise multiple motorized tool-holding spindles, for example two, three or four spindles, which are mounted on a machining head with the respective axes arranged horizontally or vertically and parallel to each other. The spindles can move along two or more axes in relation to respective parts to be machined, so as to subject simultaneously multiple parts to various successive machinings, for example milling, boring, tapping, and the like.

The parts to be machined can be fixed on a motorized part holding drum arranged at eye level in front of the spindles, with its axis horizontal and perpendicular to the axis of the spindles. The part holding drum supports typically two series of parts in diametrically opposite positions, and rotates in steps of 180° so as to alternately move one of the two series of parts in front of the spindles to be machined and the other series in a safe external region on the front side of the machine, so as to allow the operator to replace the parts that have already been machined with the unfinished ones.

In order to maximize productivity, machining centers of the type described above are usually provided with a mechanized tool magazine, from which the spindles automatically pick up the tools to be used in the various machining steps, utilizing the mobility in space of the machining head.

One type of known magazine, which is particularly appreciated for its reliability, is composed of a motorized tool holding drum. In the case of machining centers with spindles having a horizontal axis, the tool holding drum is also arranged in front of the spindles above the part holding drum, with its axis horizontal and perpendicular to the axis of the spindles but in a more inward position with respect to the perimeter of the machine.

The loading of the tools, as well as the periodic replacement of the worn tools, are performed manually. For this purpose, currently the operator must climb up a ladder which is provided on the front side of the machine and lean up to the tool holding drum.

This operation can be awkward and sometimes even risky, especially in larger machining centers in which the tool holding drum is arranged in a greatly recessed position with respect to the front of the machine; this also in view of the weight of the tools, which in certain cases can exceed 10 kg.

Generally speaking, it can be said that the larger the machining center, the more it is difficult to replace the tools; to the point that for larger machining centers it would be necessary to prepare extremely bulky and expensive structures in order to allow the user to access frontally the tool holding drum in order to replace the worn tools.

A further drawback of the above cited system occurs in the frequent case in which the operations for loading/unloading the parts are performed automatically by a single robot that serves multiple machines simultaneously. In fact, like the operator who loads/replaces the tools, the robot that loads/unloads the parts also must access the front side of the machine. Accordingly, for safety reasons, while the operator is working the robot must be halted, thus halting production not only of the machine involved but also potentially of all the other machines that face each other and are served by the same robot.

FR 2 907 357 A1 discloses a machining center with a tool transfer device comprising an articulated arm.

EP 1 637 279 A1 discloses a machining center with simultaneous tool replacement in two parallel spindles.

Therefore, the aim of the present invention is to provide a method for loading and replacing tools in machining centers provided with a mechanized tool magazine, and a machining center which uses this method, which render the tool replacement operations faster, easier, more ergonomic and safer.

This aim and these and other objects which will become better apparent hereinafter are achieved by the method having the characteristics described in claim 1 and by the machining center having the characteristics described in claim 5, while the dependent claims define other advantageous characteristics of the invention, albeit secondary ones.

The invention is now described in greater detail with reference to some preferred but not exclusive embodiments thereof, illustrated by way of nonlimiting example in the accompanying drawings, wherein:
Figure 1 is a perspective view of a machining center to which the method according to the invention is applied;
Figure 2 is a schematic lateral elevation view of the machining center of Figure 1;
Figure 3 is a perspective view of a portion of the machining center of Figure 1 in a first step of operation;
Figure 4 is a perspective view of a portion of the machining center of Figure 1 in a second step of operation;
Figure 5 is a perspective view of a portion of the machining center of Figure 1 in a fifth step of operation;
Figures 6 and 7 are two perspective views of a portion of the machining center of Figure 1 in a third step of operation, from two different angles;
Figures 8 and 9 are two perspective views of a portion of the machining center of Figure 1 in a fourth step of operation, from two different angles.

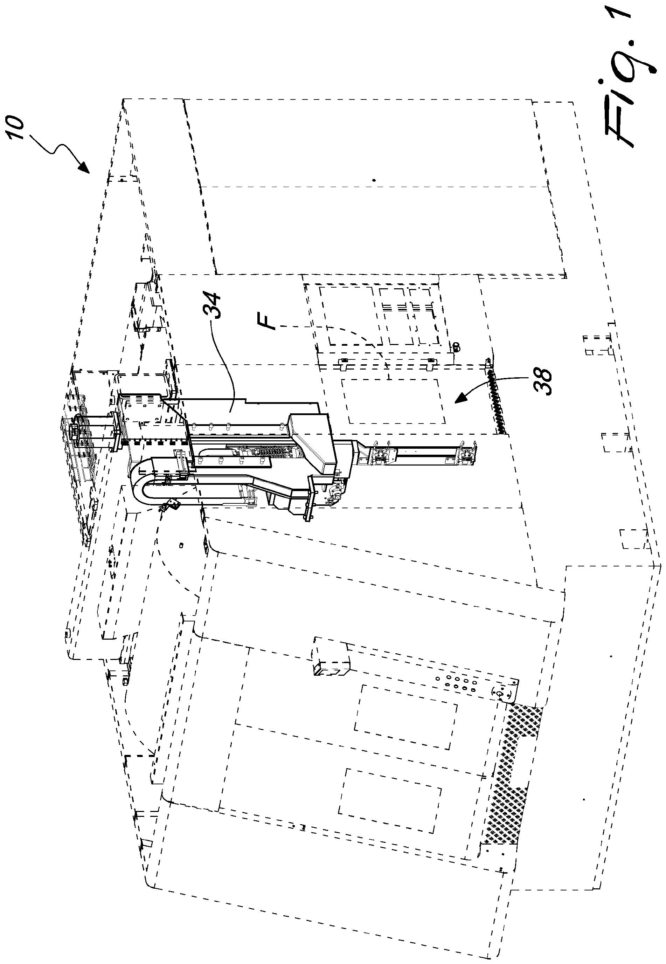

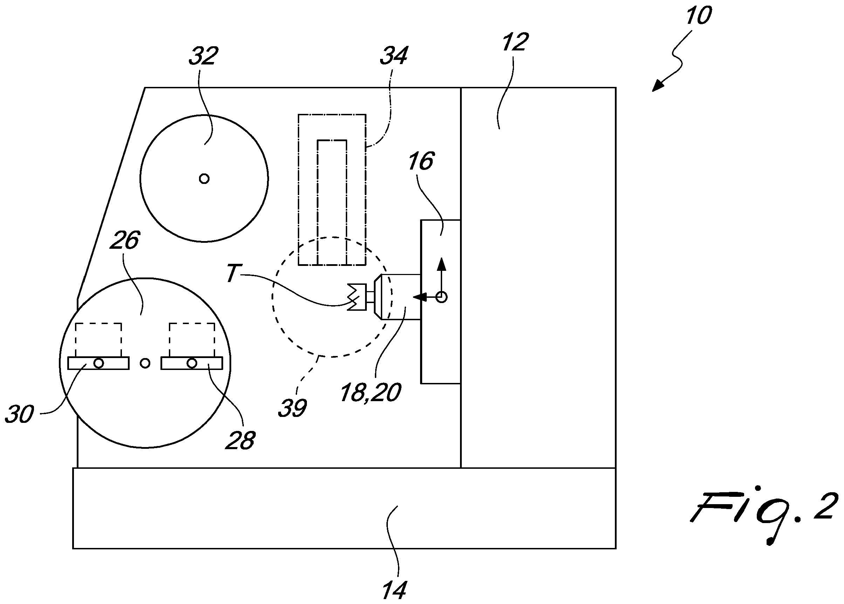

With initial reference to Figures 1 and 2, a machining center 10 comprises a structure 12 supported by a footing 14.

The frame 12 supports a per se known machining head 16. In the example described here, the machining head 16 supports two motorized tool-holding spindles 18, 20, which are arranged with their respective axes horizontal and mutually parallel. In a per se conventional manner, the machining head 16 can move in the directions of the three Cartesian axes under the control of actuation means (not shown).

The parts to be machined are mounted on a motorized part holding drum 26, which is arranged at eye level in front of the spindles 18, 20 with its axis horizontal and parallel to the axis of the spindles 18, 20. The part holding drum 26 supports two part holding cross-members 28, 30 in diametrically opposite positions, and rotates in steps of 180° so to move alternately one of the two part holding cross-members (28 in Figure 2) in front of the spindles 18, 20 for machining, and the other one (30 in Figure 2) in a safe external region in the front part of the machine. This allows an operator (not shown) to replace the parts that have already been machined with the unfinished ones while the machine is in operation.

The machining center 10 is furthermore provided with a mechanized tool magazine, from which the spindles 18, 20 pick up automatically the tools to be used in the various machining steps.

In the embodiment described here, the tool magazine comprises a motorized tool holding drum 32 which is per se conventional and is also arranged in front of the spindles 18, 20 above the part holding drum 26. The tool holding drum 32 has its axis horizontal and parallel to the axis of the spindles, but is arranged in a further inward position with respect to the part holding drum 26.

The various machinings, as well as the tool changing operations, are managed by a control unit (not shown) in a fully automated manner.

According to the invention, for the loading and periodic replacement of the tools, the operator does not access directly the tool holding drum 32 as the machining center 10 is provided with a dedicated automatic transfer device 34, which is independent of the tool magazine 32 and is controlled by the control unit to pick up the worn tools from the spindles 18, 20 and transfer them to a tool loading/replacement area 38 which can be easily accessed by the user (Figure 1), and vice versa for storing the new tools.

In practice, for the replacement of the worn tools, the spindles 18, 20 pick up the worn tools T from the tool holding drum 32 and preferably move them to a preset tool pickup area 39 (Figure 2), which can be accessed by the transfer device 34. Then the transfer device 34 simultaneously moves both worn tools into the tool replacement area 38, which in the embodiment described here is advantageously arranged at eye level on a free side of the machine (Figure 1). Once the operator has manually replaced the worn tools with the new ones, the transfer device 34 returns the new tools to the spindles 18, 20, which store them in the tool holding drum 32 or use them, depending on the work cycle.

Of course, if at the time of replacement the tools to be replaced are already mounted on the spindles 18, 20, the transfer device 34 will pick up the tools from the spindles directly.

However, obviously for the loading of the tool holding drum 32 only some of the steps listed above are necessary.

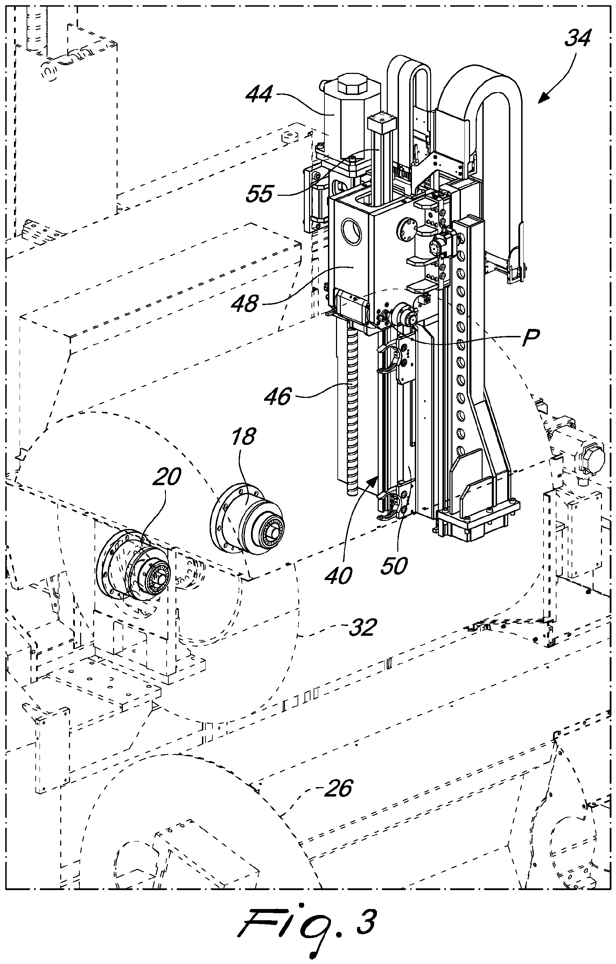

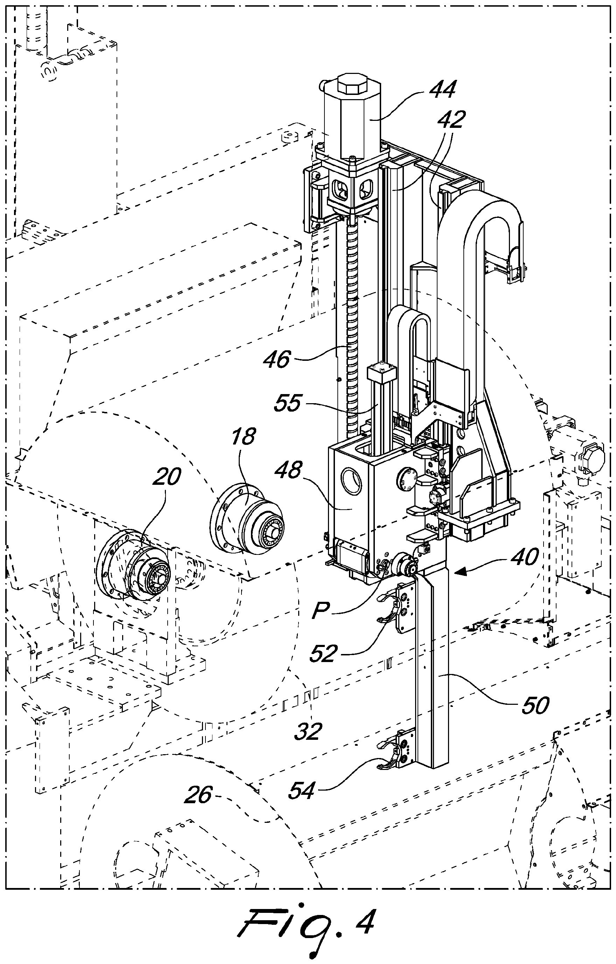

With particular reference now to Figures 3-9, in the embodiment described here the transfer device 34 comprises an articulated arm 40 which can move along vertical guides 42 between a raised resting position (Figure 3) and a lowered working position (Figures 4-9), under the control of a motor 44 with a ballscrew transmission 46 interposed.

The articulated arm 40 is provided with an upper proximal portion 48 which is coupled slidingly to the vertical guides 42 and with a lower distal portion 50 which is pivoted to the proximal portion 48 about a pivot P which is parallel to the axis of the spindles 18, 20. The distal portion 50 supports a pair of tool holding clamps 52, 54 at its opposite ends, which are mutually spaced in a manner that corresponds to the spindles 18, 20.

In an alternative embodiment (not shown), the distal portion 50 might be provided so that it is telescopic, with the distance between the clamps that therefore can vary, for example in order to facilitate the loading of the tools on the part of the operator.

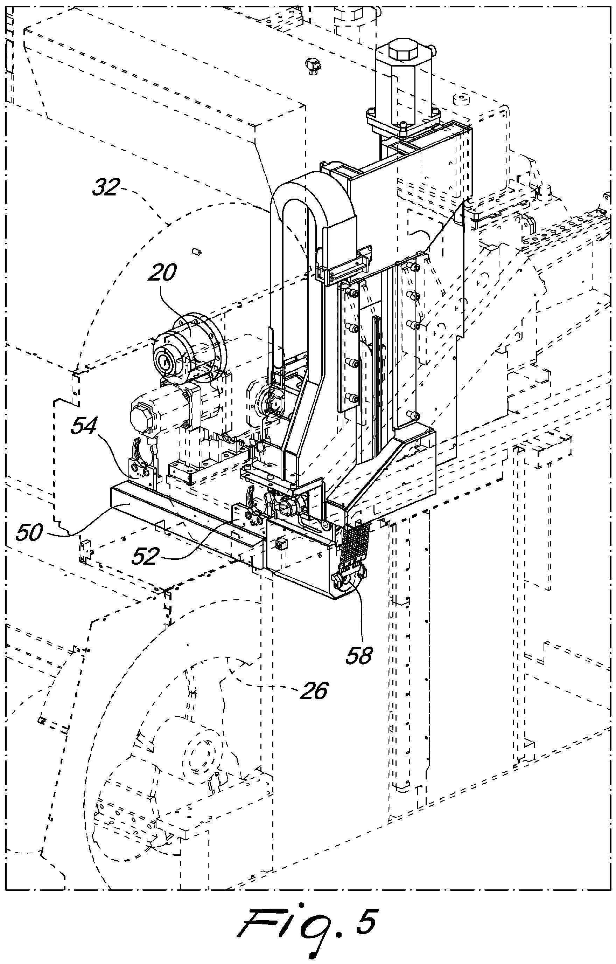

The distal portion 50 can rotate through 90° about the pivot P, under the control of first actuation means 55, between a first position which is extended vertically downward (Figures 3, 4, 8 and 9), in which the tool holding clamps 52, 54 engage the tool replacement area 38, and a second horizontal position (Figures 5-7), in which the tool holding clamps 52, 54 coaxially face the spindles 18, 20. Advantageously, the first actuation means comprise a hydraulic actuator, but as an alternative one might provide electromechanical or pneumatic solutions and the like.

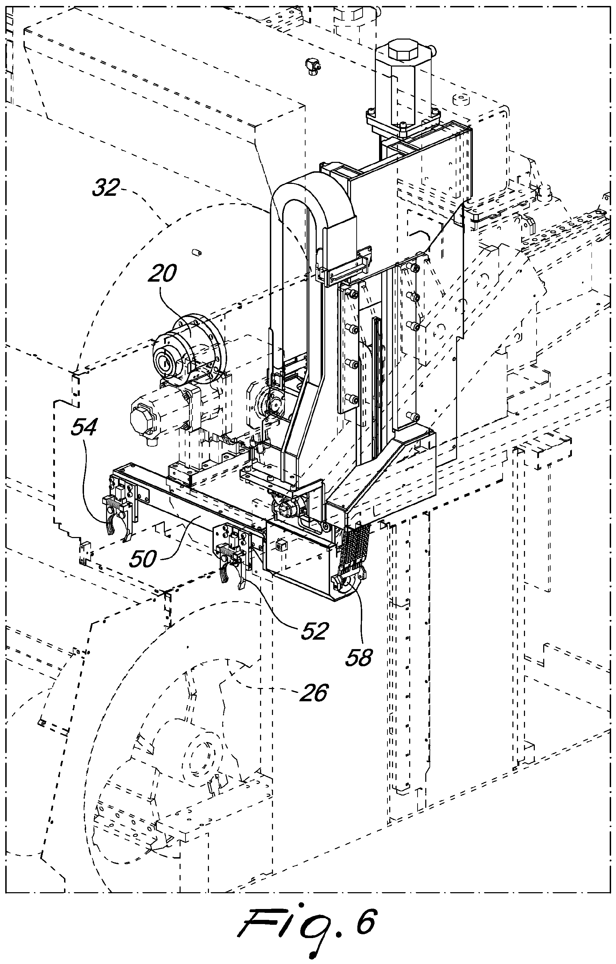

The distal portion 50 can also rotate through 180° about its own axis, under the control of second actuation means 58 (Figures 5 and 6), between a position for interfacing with the spindles (Figures 3-5), in which the tool holding clamps 52, 54 are directed inward with respect to the joint and support the tools T with the respective shanks directed toward the spindles 18, 20, and a position for interfacing with the user (Figures 6-9), in which the tool holding clamps 52, 54 are easily accessible to the user when the articulated arm 40 is in the tool replacement position 38.

Advantageously, the position for interfacing with the user is rotated substantially through 180° with respect to the position for interfacing with the spindles, with the tool holding clamps 52, 54 directed outward with respect to the joint, and support the tools with the respective shanks directed oppositely with respect to the spindles 18, 20. In this case also, the second actuation means 58 advantageously comprise a hydraulic actuator, but as an alternative one might provide electromechanical or pneumatic solutions and the like.

Furthermore, the transfer device 34 is advantageously provided with a read/write device (not shown) for each of the tool holding clamps 52, 54, which is adapted to interface with a chip (not shown) on the tool in order to read, write and/or save data related to geometry, wear, and the like, for process monitoring purposes.

In operation, the articulated arm 40 performs the movements described hereinafter.

The spindles 18, 20 pick up the tools to be replaced from the tool holding drum 32 and move them to the tool pickup area 39. In the meantime, the articulated arm 40 descends from the raised resting position of Figure 3 to the lowered working position of Figure 4. Then the distal portion 50 of the articulated arm 40 rotates through 90° in the horizontal position of Figure 5 in order to pick up the tools from the spindles 18, 20.

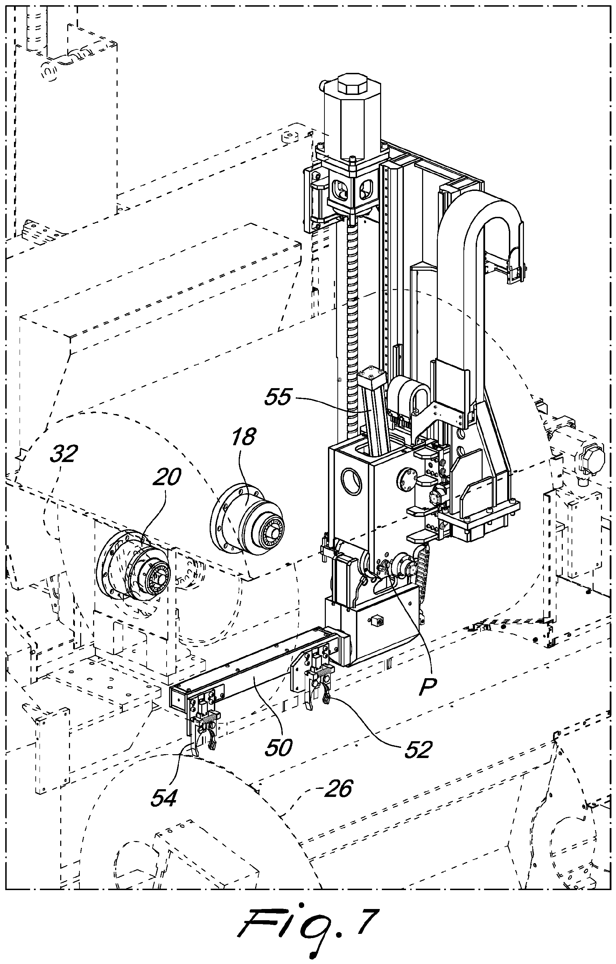

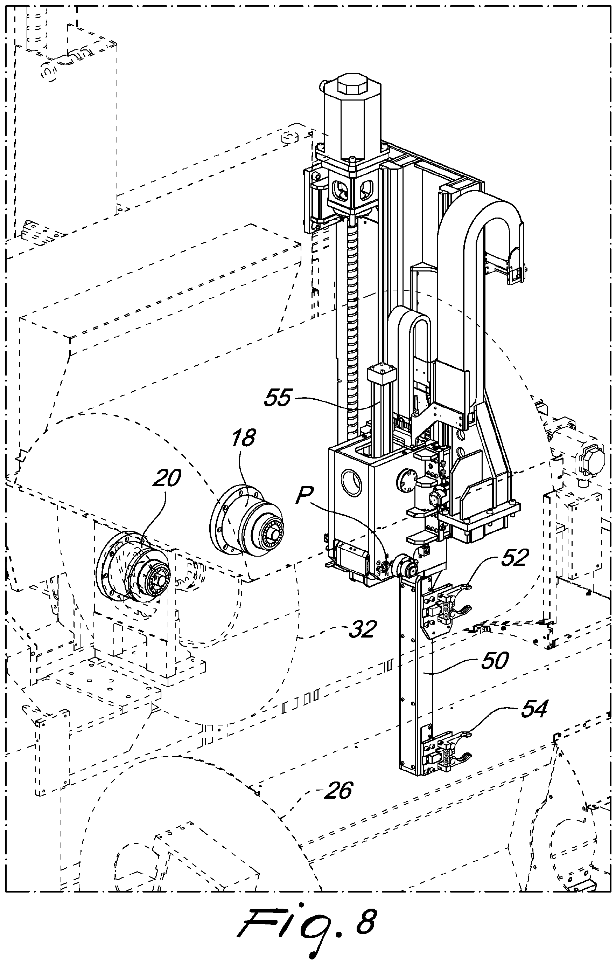

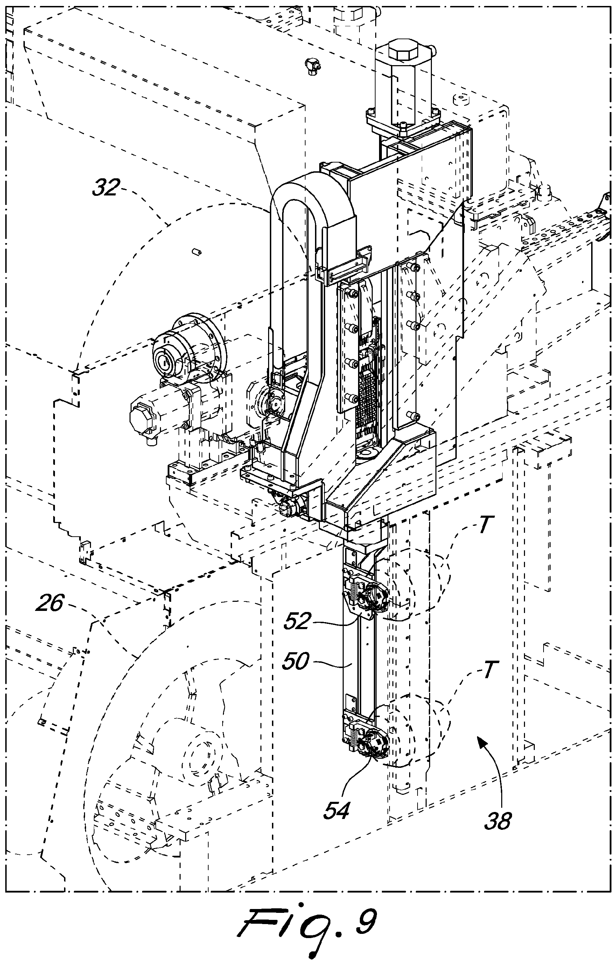

Once the tools have been picked up by the spindles, the distal portion 50 rotates through 180° about its own horizontal axis, as shown in Figures 6 and 7. At this point the distal portion 50 returns to the vertical position of Figures 8 and 9 so as to move the tools T in the tool replacement area 38 on the free side of the machine; as shown in Figure 9, the tools T are directed outward so that they can be easily handled by the user.

Once the user has replaced the tools manually, the articulated arm 40 performs the movements described above in reverse order in order to return the new tools to the spindles.

As the person skilled in the art can appreciate, the described method and machining center fully achieve the intended aim and objects, since they render the tool replacement operations faster, easier, more ergonomic and safer for the user.

In particular, the user, instead of picking up/storing the tools directly from/in the tool magazine, which is arranged in an awkward position which is difficult to access, performs these operations in a convenient position without affecting the front part of the machine. In this manner, any robot assigned to the unloading/loading of the parts can continue to operate without risks.

A preferred embodiment of the invention has been described, but of course the person skilled in the art may apply different modifications and variations within the scope of the appended claims.

For example, although in the embodiment described herein the magazine is of the drum type, the invention is of course applicable also to machining centers provided with magazines of a different type, such as chain magazines or disk magazines. In the case of chain magazines, for example, the invention might be useful to create a path of the chain that is less convoluted or capable of increasing the tool storage capacity.

Furthermore, in the example described herein, the articulated arm 40 must perform three movements (rise/descent of the proximal portion 48; bending through 90°; rotation through 180° of the distal portion 50) in order to adapt to the layout and to the space occupation of the machine. In particular, the rise to the resting position is necessary so that the work area is visible from a side window F during machining operations (Figure 1), the opposite side of the machine being engaged by other equipment. However, depending on the type of machine, one or more of the movements of the arm might be eliminated. For example, if the work area is visible from a window on the opposite side, the rise to the resting position will not be necessary. Nevertheless, again depending on the layout and the space occupations of the machine, the articulated arm 40 might slide horizontally or obliquely between the resting position and the active position, instead of vertically.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for loading and replacing tools in machining centers provided with a mechanized tool magazine (32) and with at least two movable tool-holding spindles (18, 20), which are laterally arranged side by side, are supported by a machining head (16) that can move along at least one axis, and are capable of accessing said tool magazine (32), comprising the following steps:
- picking up simutaneously the respective tools from said at least two tool-holding spindles (18, 20) and transferring them to a tool replacement area (38) by means of a dedicated, automatic transfer device (34) that is independent of said tool magazine (32), and
- after the replacement of the tools with respective new tools in the transfer device (34), returning simultaneously the respective new tools to said at least two tool-holding spindles (18, 20) by means of said transfer device (34), said transfer device (34), at rest, being parked in a resting position such that it does not engage said tool replacement area (38), said transfer device (34) comprising an articulated arm (40) which has a distal portion (50) which is adapted to rotate, under the control of first actuation means (56), about a pivot (P) parallel to the axes of the spindles (18, 20), between a first position extended vertically downward, in which said tool-gripping means (52, 54) engage said tool replacement area (38), and a second horizontal position, in which said tool-gripping means (52, 54) face said spindles (18, 20).

2. The method according to claim 1, **characterized in that** upstream and downstream of said steps said at least two tool-holding spindles (18, 20) respectively picks up and returns the tools from/to said tool magazine (32).

3. The method according to claim 1 or 2, **characterized in that** said transfer device (34) picks up from, and returns to, said at least two tool-holding spindles (18, 20) the respective tools in a preset pickup/return position (39).

4. The method according to anyone of claims 1-3, **characterized in that** the movements of said transfer device (34) are controlled in an automated manner by a control unit.

5. A machining center provided with a mechanized tool magazine (32) and with at least two movable tool-holding spindles (18, 20) which are laterally arranged side by side, are supported by a machining head (16) that can move along at least one axis, and are capable of accessing said tool magazine (32), comprising a dedicated, automatic transfer device (34) that is independent of said tool magazine (32), which is controlled to pick up respective at least two tools from said at least two tool-holding spindles (18, 20) and transfer them to a tool replacement area (38) and, after replacement of the tools in the transfer device (34), returning the respective new tools to said at least two tool-holding spindles (18, 20), said transfer device (34), at rest, being parked in a resting position such that it does not engage said tool replacement area (38), said transfer device (34) comprising an articulated arm (40) which has a distal portion (50) which is adapted to rotate under the control of first actuation means (56), about a pivot (P) parallel to the axes of the spindles (18, 20), between a first position extended vertically downward, in which said tool-gripping means (52, 54) engage said tool replacement area (38), and a second horizontal position, in which said tool-gripping means (52, 54) face said spindles (18, 20).

6. The machining center according to claim 5, **characterized in that** said transfer device (34) is provided with tool-gripping means (52, 54) which can be mutually spaced in a manner that corresponds to said at least two tool-holding spindles (18, 20) in order to pick up and return the respective tools simultaneously.

7. The machining center according to claim 5 or 6, **characterized in that** said distal portion (50) is pivoted to a proximal portion (48) that can move between said resting position and a working position under the control of second motor means (44, 46).

8. The machining center according to claim 7, **characterized in that** said resting position and said working position are vertically spaced.

9. The machining center according to claim 7 or 8, **characterized in that** said distal portion (50) is connected so that it can rotate about its own axis to said proximal portion (48) in order to rotate, under the control of further actuation means (58), between a position for interfacing with the spindles, in which said tool-gripping means (52, 54) support the tools with the respective shanks directed toward said tool-holding spindles (18, 20), and a position for interfacing with the user, in which said tool-gripping means (52, 54) can be easily accessed by the user when said articulated arm (40) is in said tool replacement area (38).

10. The machining center according to anyone of claims 5-9, **characterized in that** said transfer device (34) is provided with a read/write device which is adapted to interface with a chip on the tool in order to read, write and/or save data related to geometry, wear, and the like.

## Patentansprüche

1. Ein Verfahren zum Laden und Ersetzen von Werkzeugen in Bearbeitungszentren mit einem mechanischen Werkzeugmagazin (32) und mit mindestens zwei beweglichen Werkzeughaltespindeln (18, 20), die seitlich nebeneinander angeordnet sind, von einem Bearbeitungskopf (16) getragen sind, der sich entlang mindestens einer Achse bewegen kann, und in der Lage sind, auf das Werkzeugmagazin (32) zuzugreifen; folgende Schritte umfassend:
- das gleichzeitige Aufnehmen der entsprechenden Werkzeuge von den mindestens zwei Werkzeughaltespindeln (18, 20) und das Transportieren derselben in einen Werkzeugaustauschbereich (38) mit Hilfe einer dafür bestimmten, automatischen Transportvorrichtung (34), die unabhängig von dem Werkzeugmagazin (32) ist, und
- nach dem Ersetzen der Werkzeuge durch entsprechende neue Werkzeuge in der Transportvorrichtung (34), das gleichzeitige Zurückführen der entsprechenden neuen Werkzeuge zu den mindestens zwei Werkzeughaltespindeln (18, 20) mit Hilfe der Transportvorrichtung (34), wobei die Transportvorrichtung (34) im Ruhezustand in einer Ruheposition geparkt ist, so dass sie nicht mit dem Werkzeugaustauschbereich (38) in Eingriff steht, wobei die Transportvorrichtung (34) einen Gelenkarm (40) umfasst, der einen distalen Abschnitt (50) hat, welcher ausgebildet ist, um sich, unter der Kontrolle erster Antriebsmittel (56), um einen Drehzapfen (P) parallel zu den Achsen der Spindeln (18, 20) zu drehen, zwischen einer ersten Position, die sich vertikal nach unten erstreckt und in welcher die Werkzeuggreifmittel (52, 54) in Eingriff mit dem Werkzeugaustauschbereich (38) stehen, und einer zweiten, horizontalen Position, in welcher die Werkzeuggreifmittel (52, 54) den Spindeln (18, 20) zugewandt sind.

2. Das Verfahren gemäß Anspruch 1, **dadurch gekennzeichnet, dass** stromaufwärts und stromabwärts von den Schritten die mindestens zwei Werkzeughaltespindeln (18, 20) die Werkzeuge von dem Werkzeugmagazin (32) aufnehmen beziehungsweise dorthin zurückbringen.

3. Das Verfahren gemäß Anspruch 1 oder 2, **dadurch gekennzeichnet, dass** die Transportvorrichtung (34) die jeweiligen Werkzeuge in einer vordefinierten Aufnahme- /Rückführposition (39) von den mindestens zwei Werkzeughaltespindeln (18, 20) aufnimmt und sie dorthin zurückbringt.

4. Das Verfahren gemäß einem beliebigen der Ansprüche 1-3, **dadurch gekennzeichnet, dass** die Bewegungen der Transportvorrichtung (34) automatisch von einer Steuereinheit gesteuert werden.

5. Ein Bearbeitungszentrum, ausgestattet mit einem mechanischen Werkzeugmagazin (32) und mit mindestens zwei beweglichen Werkzeughaltespindeln (18, 20), die seitlich nebeneinander angeordnet sind, von einem Bearbeitungskopf (16) getragen sind, der sich entlang mindestens einer Achse bewegen kann, und in der Lage sind, auf das Werkzeugmagazin (32) zuzugreifen; eine dafür bestimmte, automatische Transportvorrichtung (34) umfassend, die unabhängig von dem Werkzeugmagazin (32) ist, welches gesteuert wird, um mindestens zwei Werkzeuge von den mindestens zwei Werkzeughaltespindeln (18, 20) aufzunehmen und sie in einen Werkzeugaustauschbereich (38) zu transportieren und, nach Austausch der Werkzeuge in der Transportvorrichtung (34), die jeweiligen neuen Werkzeuge zu den mindestens zwei Werkzeughaltespindeln (18, 20) zurückzuführen; wobei die Transportvorrichtung (34) im Ruhezustand in einer Ruheposition geparkt ist, so dass sie nicht mit dem Werkzeugaustauschbereich (38) in Eingriff steht; wobei die Transportvorrichtung (34) einen Gelenkarm (40) umfasst, der einen distalen Abschnitt (50) hat, welcher ausgebildet ist, um sich, unter der Kontrolle erster Antriebsmittel (56), um einen Drehzapfen (P) parallel zu den Achsen der Spindeln (18, 20) zu drehen zwischen einer ersten Position, die sich vertikal nach unten erstreckt und in der die Werkzeuggreifmittel (52, 54) in Eingriff mit dem Werkzeugaustauschbereich (38) stehen, und einer zweiten, horizontalen Position, in welcher die Werkzeuggreifmittel (52, 54) den Spindeln (18, 20) zugewandt sind.

6. Das Bearbeitungszentrum gemäß Anspruch 5, **dadurch gekennzeichnet, dass** die Transportvorrichtung (34) mit Werkzeuggreifmitteln (52, 54) ausgestattet ist, die voneinander auf eine Art beabstandet sein können, die den mindestens zwei Werkzeughaltespindeln (18, 20) entspricht, um die jeweiligen Werkzeuge gleichzeitig aufzunehmen und zurückzuführen.

7. Das Bearbeitungszentrum gemäß den Ansprüchen 5 oder 6, **dadurch gekennzeichnet, dass** der distale Abschnitt (50) drehgelenkig mit einem proximalen Abschnitt (48) verbunden ist, der sich unter der Kontrolle zweiter Motormittel (44, 46) zwischen der Ruheposition und einer Arbeitsposition bewegen kann.

8. Das Bearbeitungszentrum gemäß Anspruch 7, **dadurch gekennzeichnet, dass** die Ruheposition und die Arbeitsposition vertikal beabstandet sind.

9. Das Bearbeitungszentrum gemäß den Ansprüchen 7 oder 8, **dadurch gekennzeichnet, dass** der distale Abschnitt (50) drehbar um seine eigene Achse mit dem proximalen Abschnitt (48) verbunden ist, um sich, unter der Kontrolle weiterer Antriebsmittel (58), zwischen einer Position zur Interaktion mit den Spindeln, in welcher die Werkzeuggreifmittel (52, 54) die Werkzeuge tragen, während die jeweiligen Schäfte den Werkzeughaltespindeln (18, 20) zugewandt sind, und einer Position zur Interaktion mit dem Benutzer zu drehen, in welcher der Benutzer leicht auf die Werkzeuggreifmittel (52, 54) zugreifen kann, wenn der Gelenkarm (40) sich in dem Werkzeugaustauschbereich (38) befindet.

10. Das Bearbeitungszentrum gemäß einem beliebigen der Ansprüche 5-9, **dadurch gekennzeichnet, dass** die Transportvorrichtung (34) mit einer Schreib-/Lese-Vorrichtung ausgestattet ist, die ausgebildet ist, um mit einem Chip am Werkzeug zu interagieren, um Daten bezüglich Geometrie, Verschleiß und dergleichen zu lesen, zu schreiben und/oder zu speichern.

## Revendications

1. Procédé pour charger et remplacer des outils dans des centres d'usinage pourvus d'un magasin d'outils mécanisé (32) et d'au moins deux broches porte-outils mobiles (18, 20), qui sont latéralement agencées côte à côte, sont supportées par une tête d'usinage (16) qui peut se déplacer le long d'au moins un axe, et sont capables d'accéder audit magasin d'outils (32), comportant les étapes suivantes consistant à :
- prendre simultanément les outils respectifs à partir desdites au moins deux broches porte-outils (18, 20) et les transférer vers une zone de remplacement d'outils (38) au moyen d'un dispositif de transfert automatique (34) dédié qui est indépendant dudit magasin d'outils (32), et
- après le remplacement des outils par des outils neufs respectifs dans le dispositif de transfert (34), ramener simultanément les outils neufs respectifs vers lesdites au moins deux broches porte-outils (18, 20) au moyen dudit dispositif de transfert (34), ledit dispositif de transfert (34), au repos, étant stationné dans une position de repos de telle sorte qu'il ne s'engage pas dans ladite zone de remplacement d'outils (38), ledit dispositif de transfert (34) comportant un bras articulé (40) qui a une partie distale (50) qui est adaptée pour tourner, sous la commande de premiers moyens d'actionnement (56), autour d'un pivot (P) parallèle aux axes des broches (18, 20), entre une première position s'étendant verticalement vers le bas, dans laquelle lesdits moyens de saisie d'outils (52, 54) s'engagent dans ladite zone de remplacement d'outils (38), et une seconde position horizontale, dans laquelle lesdits moyens de saisie d'outils (52, 54) font face auxdites broches (18, 20).

2. Procédé selon la revendication 1, **caractérisé en ce qu'**en amont et en aval desdites étapes, lesdites au moins deux broches porte-outils (18, 20) prennent respectivement et ramènent les outils depuis/vers ledit magasin d'outils (32).

3. Procédé selon la revendication 1 ou 2, **caractérisé en ce que** ledit dispositif de transfert **(34)** prend à partir desdites au moins deux broches porte-outils (18, 20) et ramène vers celles-ci, les outils respectifs dans une position de prise/retour (39) prédéfinie.

4. Procédé selon l'une quelconque des revendications 1 à 3, **caractérisé en ce que** les mouvements dudit dispositif de transfert (34) sont commandés d'une manière automatisée par une unité de commande.

5. Centre d'usinage pourvu d'un magasin d'outils mécanisé (32) et d'au moins deux broches porte-outils mobiles (18, 20) qui sont latéralement agencées côte à côte, sont supportées par une tête d'usinage (16) qui peut se déplacer le long d'au moins un axe, et sont capables d'accéder audit magasin d'outils (32), comportant un dispositif de transfert automatique dédié (34) qui est indépendant dudit magasin d'outils (32), qui est commandé pour prendre au moins deux outils respectifs à partir desdites au moins deux broches porte-outils (18, 20) et les transférer vers une zone de remplacement d'outils (38) et, après remplacement des outils dans le dispositif de transfert (34), ramener les outils neufs respectifs vers lesdites au moins deux broches porte-outils (18, 20), ledit dispositif de transfert (34), au repos, étant stationné dans une position de repos de telle sorte qu'il ne s'engage pas dans ladite zone de remplacement d'outils (38), ledit dispositif de transfert (34) comportant un bras articulé (40) qui a une partie distale (50) qui est adaptée pour tourner, sous la commande de premiers moyens d'actionnement (56), autour d'un pivot (P) parallèle aux axes des broches (18, 20), entre une première position s'étendant verticalement vers le bas, dans laquelle lesdits moyens de saisie d'outils (52, 54) s'engagent dans ladite zone de remplacement d'outils (38), et une seconde position horizontale, dans laquelle lesdits moyens de saisie d'outils (52, 54) font face auxdites broches (18, 20).

6. Centre d'usinage selon la revendication 5, **caractérisé en ce que** ledit dispositif de transfert (34) est pourvu de moyens de saisie d'outils (52, 54) qui peuvent être mutuellement espacés d'une manière qui correspond auxdites au moins deux broches porte-outils (18, 20) afin de prendre et de ramener simultanément les outils respectifs.

7. Centre d'usinage selon la revendication 5 ou 6, **caractérisé en ce que** ladite partie distale (50) pivote sur une partie proximale (48) qui peut se déplacer entre ladite position de repos et une position de travail sous la commande de seconds moyens moteurs (44, 46).

8. Centre d'usinage selon la revendication 7, **caractérisé en ce que** ladite position de repos et ladite position de travail sont espacées verticalement.

9. Centre d'usinage selon la revendication 7 ou 8, **caractérisé en ce que** ladite partie distale (50) est reliée de sorte qu'elle peut tourner autour de son propre axe jusqu'à ladite partie proximale (48) afin de tourner, sous la commande de moyens d'actionnement supplémentaires (58), entre une position d'interfaçage avec les broches, dans laquelle lesdits moyens de saisie d'outils (52, 54) supportent les outils avec les queues respectives dirigées vers lesdites broches porte-outils (18, 20), et une position d'interfaçage avec l'utilisateur, dans laquelle l'utilisateur peut facilement accéder auxdits moyens de saisie d'outils (52, 54) lorsque ledit bras articulé (40) est dans ladite zone de remplacement d'outils (38).

10. Centre d'usinage selon l'une quelconque des revendications 5 à 9, **caractérisé en ce que** ledit dispositif de transfert (34) est pourvu d'un dispositif de lecture/écriture qui est adapté pour s'interfacer avec une puce sur l'outil afin de lire, d'écrire et/ou d'enregistrer des données associées à la géométrie, l'usure et analogue.
